# FASCICULE DE BREVET EUROPEEN

(11) **EP 0 664 194 B1**
(45) Date de publication et mention de la délivrance du brevet: **01.07.1998**
(21) Numéro de dépôt: 95420012.7
(22) Date de dépôt: 19.01.1995
(51) Int. Cl.: B29C 33/04, B29C 39/38, B29C 33/20, A63H 33/00

(54) **Dispositif destiné à la fusion d'une matière par trempé dans un bain de liquide chaud**
Vorrichtung zum Schmelzen von Kunststoffmaterial durch Eintarchen in eine warmen Flüssigkeit
Device for melting a plastic material by dipping in a warm liquid

(30) Priorité: 20.01.1994 FR 9400809
(43) Date de publication de la demande: 26.07.1995
(73) Titulaire: SMOBY, F-39170 Lavans les Saint Claude (FR)
(72) Inventeur: Breuil, Dany, Lavans les Saint Claude (FR)
(74) Mandataire: Karmin, Roger

(56) Documents cités:
- FR-A- 1 201 338
- US-A- 3 063 109
- US-A- 3 309 738

## Description

La présente invention est relative à un dispositif destiné à la fusion d'une matière par trempé dans un bain de liquide chauffé à basse température en vue de créer un jeu de moulage de ladite matière.

On sait que les enfants apprécient tout particulièrement la création d'objets, par exemple en sculptant de la pâte à modeler ou encore en conformant de la pâte dans des moules pré-fabriqués. Un jouet de moulage pour enfants est connu de US-A-3,309,738.

La présente invention vise un dispositif permettant à l'enfant de ramollir une matière plastique se présentant en grains solides en vue de constituer une pâte pouvant être déversée dans un mou le dans lequel elle se solidifie en refroidissant. Un tel procédé évoque pour les enfants un moulage industriel et présente donc pour eux un intérêt très attractif.

Le dispositif destiné à la mise en oeuvre du moulage précité comporte un bain de liquide disposé dans une cuve chauffée et un panier renfermant la matière brute qui est trempée dans le bain pour la ramollir.

Le dispositif suivant l'invention comprend des moyens exerçant sur le panier une force de réaction telle qu'il a tendance à basculer vers le haut, de sorte que ledit panier est placé en position émergée dans laquelle le produit fondu se trouve hors du bain, tandis qu'alors ledit panier constitue un écran de protection empêchant l'accès au bain chaud.

Suivant l'invention, le panier est articulé par rapport à un socle renfermant la cuve chauffante et sur lequel un couvercle coiffant le panier est monté à pivotement, des moyens étant prévus pour permettre l'élévation automatique du panier lorsqu'on soulève le couvercle, tandis que d'autres moyens élastiques sont prévus sur ledit panier afin qu'il soit maintenu en position élevée quand le couvercle est ouvert, le couvercle étant pourvu de moyens d'action sur les moyens élastiques du panier en vue de les déformer pour permettre de l'immerger lors de la fermeture du couvercle.

Le dessin annexé, donné à titre d'exemple, permettra de mieux comprendre l'invention, les caractéristiques qu'elle présente et les avantages qu'elle est susceptible de procurer :
Fig. 1 est une coupe transversale de l'appareil suivant l'invention à l'état fermé.
Fig. 2 est une vue correspondante à celle de fig. 1, mais représentant le couvercle ouvert et le panier émergé du bain chauffant.
Fig. 3 et 4 sont des vues de détail à plus grande échelle illustrant les moyens de verrouillage du panier par rapport au socle, respectivement à ses positions immergée et émergée.

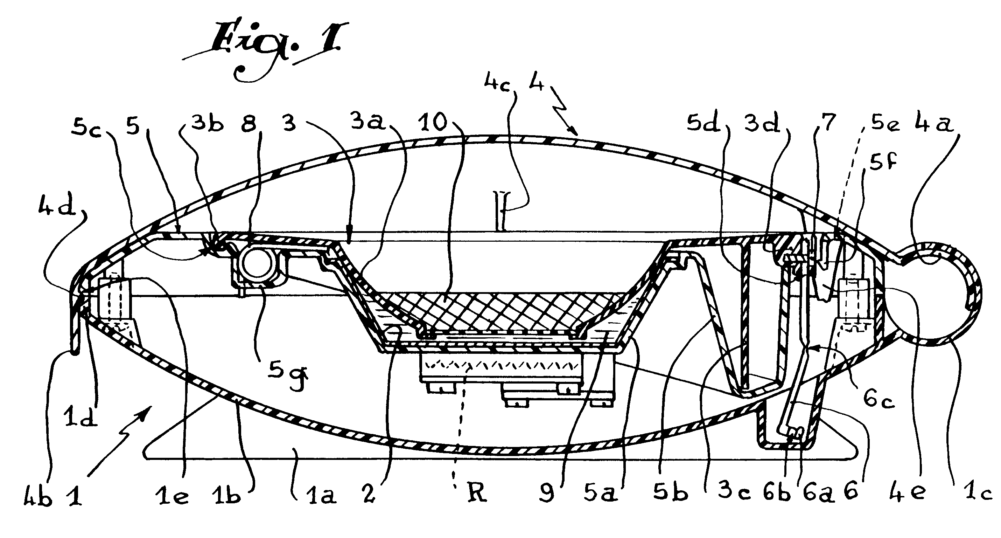

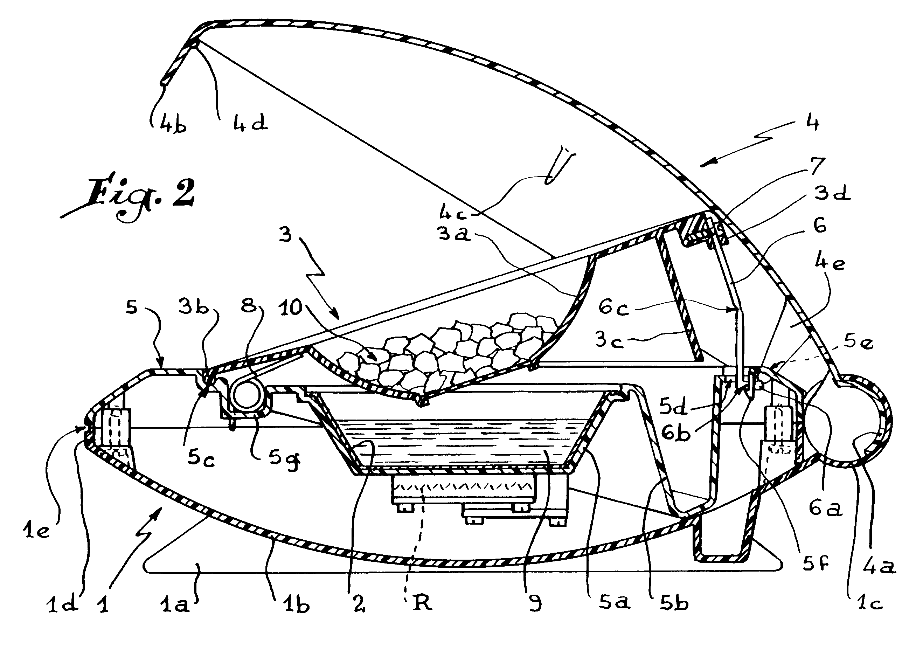

Comme illustré en fig. 1 et 2, le dispositif suivant l'invention comprend essentiellement un socle 1 renfermant une cuve centrale 2, un panier 3 comportant une partie centrale concave 3a percée d'une multiplicité de petits trous et un couvercle 4.

Le socle 1 est pourvu d'un piétement 1a permettant de le faire reposer sur une surface horizontale. Il présente une paroi inférieure 1b concave vers le haut dont l'extrémité arrière est réalisée sous la forme d'une gouttière 1c ouverte vers l'avant, le reste de la paroi 1b se termine par un bord vertical 1d.

Une coquille 5 constitue la paroi supérieure du socle 1 auquel elle est par exemple soudée tout le long du bord 1d. Le centre de la coquille 5 comporte une dépression 5a dans laquelle est disposée la cuve 2. En dessous de la dépression 5a se trouve une résistance chauffante R. La coquille 5 comporte à sa partie arrière un pied creux 5b réalisé sous la forme d'un canal arrondi dont la partie inférieure vient en appui contre la face interne de la paroi 1b pour faciliter l'assemblage du couvercle et du socle 1.

Le panier 3 se présente sous la forme d'une plaque dont l'arête avant rectiligne 3b est engagée dans une rainure 5c lui permettant ainsi de pivoter afin que sa partie centrale 3a puisse venir dans la cuve 2 de forme complémentaire.

On observe la présence d'une jupe arrière 3c du panier qui vient se positionner à l'intérieur du pied creux 5b.

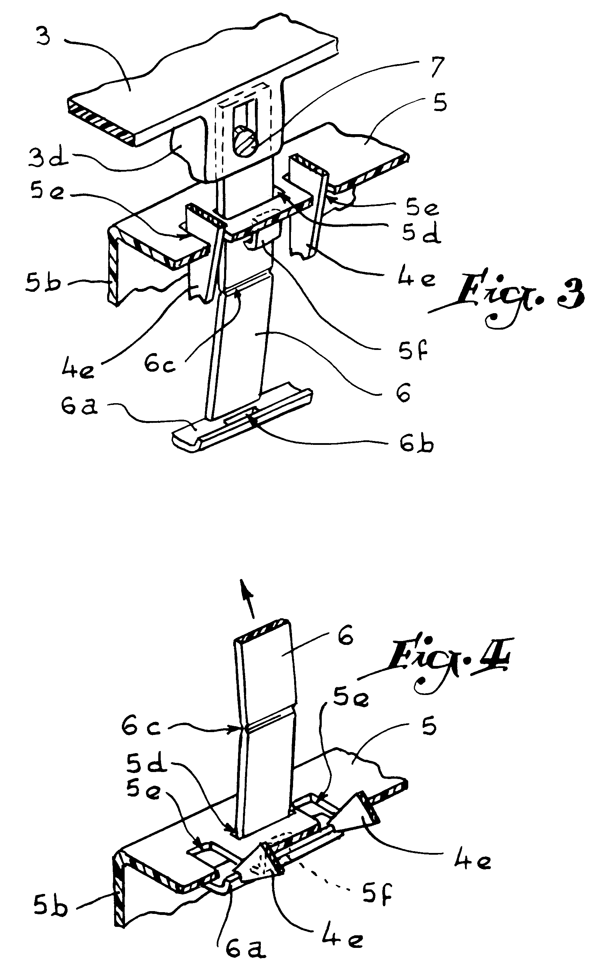

Comme illustré en fig. 3, la partie arrière du panier 3 est munie d'une oreille verticale 3d dans laquelle on a ménagé une creusure verticale destinée à recevoir l'une des extrémités d'une patte élastique 6 fixée à ladite oreille au moyen d'une vis 7. On notera que l'autre extrémité de la patte élastique comprend une barrette transversale 6a dont le centre est pourvu d'une entaille 6b dont le rôle sera mieux expliqué plus loin.

La patte 6 traverse un passage 5d du rebord arrière plat de la coquille 5 qui comprend deux encoches débouchantes 5e. La face inférieure du rebord arrière précité est munie d'un crochet 5f.

En revenant à fig. 1 et 2, on observe que la forme générale du couvercle est bombée et que son arête arrière est constituée par un repli arrondi 4a propre à s'engager dans la gouttière 1c de manière que le couvercle puisse pivoter au niveau de cette dernière. L'arête avant du couvercle est pourvue d'une languette 4b. Au moins un pion 4c est ménagé à l'intérieur du couvercle 4 pour venir en appui contre la périphérie du panier 3. On observe que la languette 4b comprend un cordon 4d propre à s'encliqueter dans une gorge 1e de la partie avant du bord 1d du socle 1. On note enfin la présence d'un ressort de torsion 8 disposé dans une empreinte 5g du dessus de la coquille 5, ses deux extrémités appuyant respectivement contre le panier 3 et contre le socle 1, de telle sorte que le panier ait tendance à basculer vers le haut lorsqu'il est à l'état libre.

Le fonctionnement est le suivant :

Quand l'appareil se trouve à la position illustrée en fig. 2, il est possible de déverser dans la cuve 2 une certaine quantité de liquide tel que de l'eau pour constituer un bain référencé 9. Ensuite, on place dans la partie centrale 3a du panier 3 une certaine quantité de matière en grains 10 qu'on désire faire fondre ou tout au moins ramollir considérablement dans le bain 9.

On observe que dans cette position ouverte, la barrette 6a de la patte élastique 6 se trouve retenue par engagement du crochet 5f dans l'entaille 6b, comme illustré en fig. 4. Dans cette position, le couvercle 4 est maintenu ouvert par action du panier 3 contre sa face inférieure, du fait de la réaction du ressort 8.

Lorsqu'on désire faire fondre ou ramollir la matière 10, l'utilisateur ferme le couvercle 4, de telle sorte que son pivotement autour de la gouttière 1c provoque tout d'abord la descente d'ergots 4e (fig. 3 et 4) solidaires de la face inférieure du couvercle et qui après avoir traversé les encoches 5e viennent agir sur les ailes de la barrette 6a en vue de désolidariser la patte 6 et le crochet 5f. En même temps, le couvercle, prenant appui sur le panier 3, provoque la descente de celui-ci jusqu'à ce que les pions 4c viennent en appui contre le pourtour du panier pour terminer la fermeture de celui-ci (fig. 1). En fin de course, le cordon 4d du couvercle 4 vient s'encliqueter dans la gorge 1e du socle 1, de telle sorte qu'alors l'appareil est maintenu fermé. On peut associer au socle un contact commandé par le couvercle de manière tout à fait usuel le afin de fermer un circuit d'alimentation de la résistance R placée sous la cuve 2. Dans ces conditions, le bain 9 s'échauffe et communique les calories nécessaires à la fusion ou tout au moins au ramollissement de la matière plastique 10. Bien entendu, la puissance de la résistance R est déterminée de manière que le bain 9 atteigne la température de ramollissement de la matière 10 prévue autour de 60 à 70°C.

Après un certain temps indiqué par la notice d'utilisation, la matière plastique 10 est ramollie et l'on peut alors s'en servir pour effectuer des moulages. A cet effet, on ouvre le couvercle 4, ce qui provoque le basculement du panier 3 vers le haut grâce à l'action du ressort 8. En fin de course, la barrette 6a vient sous le rebord de la coquille 5 et le crochet 5f s'engage dans l'entaille 6b de manière que le panier soit verrouillé en position soulevée. Cette position verrouillée permet bien entendu de saisir la matière fondue 10 sans possibilité de ré-immerger le panier 3, de telle sorte que l'utilisateur ne peut pas se brûler dans le bain 9. Dans cette position verrouillée du panier, celui-ci constitue un écran de protection empêchant l'accès au bain chaud 9.

On peut bien entendu utiliser toute matière appropriée pour réaliser le dispositif suivant l'invention. De manière préférable, on choisit des matières plastiques dont les qualités répondent au desiderata de résistance des différents composants dudit dispositif. En ce qui concerne la patte 6, elle est préférablement réalisée en polypropylène avec une zone amincie centrale 6c. De même, la matière constitutive de la coquille 5 doit être telle qu'elle présente une certaine rigidité et une bonne résistance à la température ainsi qu'une certaine souplesse afin que le crochet 5f puisse être élastique. Là encore, on peut avantageusement choisir comme matière du polyprolylène. Quant à la cuve 2 elle est réalisée soit en matière plastique, soit en métal embouti.

Lorsque l'on veut nettoyer l'appareil, on peut dévisser la vis 7 en traversant une petite ouverture appropriée non représentée ménagée dans le couvercle afin d'extraire le panier 1.

## Revendications

1. Dispositif destiné à la fusion d'une matière (10) par trempé dans un bain (9) de liquide chaud comportant un panier (3) percé d'une multiplicité de petits trous, une cuve chauffante (2) contenant le liquide et des moyens (8) exerçant sur ladit panier une force de réaction telle que ledit panier a tendance à basculer vers le haut de sorte que ledit panier est placé en position émergée dans laquelle le produit fondu (10) se trouve hors du bain chaud (9) tandis qu'alors ledit panier (3) constitue un écran de protection empêchant l'accès au bain chaud (9).

2. Dispositif suivant la revendication 1, caractérisé en ce que le panier (3) est articulé par rapport à un socle (1-5) renfermant la cuve (2) et sur lequel un couvercle (4) coiffant le panier (3) est monté à pivotement de manière que son ouverture provoque ladite élévation automatique du panier (3) lorsqu'on soulève le couvercle (4), tandis que des moyens élastiques (6) sont prévus sur ledit panier (3) afin qu'il soit maintenu ouvert ainsi que le couvercle (4) qui est pourvu de moyens (4e) d'action sur les moyens élastiques (6) du panier (3) en vue de les déformer pour permettre de l'immerger quand on referme le couvercle (4).

3. Dispositif suivant la revendication 2, caractérisé en ce qu'un ressort de torsion (8) dont les extrémités sont en appui contre le panier (3) et le socle (1-5) charge élastiquement le panier (3) dans le sens de son ouverture.

4. Dispositif suivant la revendication 2, caractérisé en ce que la partie arrière du panier est pourvue d'une patte flexible (6) traversant un passage (5d) ménagé dans le rebord du socle (2-5) et dont l'extrémité porte une barrette transversale (6a) propre à venir s'encliqueter avec un crochet (5f) dudit socle (1-5), tandis qu'en combinaison le couvercle (4) comporte deux ergots (4e) qui, lorsqu'on le referme, traversent deux encoches (5e) du rebord du socle (1-5) et viennent appuyer sur les branches de la barrette (6a) de la patte flexible (6) pour la déverrouiller.

5. Dispositif suivant la revendication 4, caractérisé en ce que la patte (6) est fixée au panier (3) de manière démontable.

6. Dispositif suivant la revendication 4, caractérisé en ce que le couvercle (4) est en outre pourvu d'une part d'au moins un pion (4c) qui dans sa position fermée prend appui contre le panier (3) pour le maintenir immergé et d'autre part d'une languette (4b) comportant des moyens (4d) de verrouillage par rapport au socle (1-5).

## Claims

1. Device intended for melting a material (10) by dipping in a bath (9) of hot liquid, which includes a basket (3) drilled with a multiplicity of small holes, a heating vessel (2) which contains the liquid, and means (8) which exert a reaction force on the said basket such that the said basket tends to swing upwards so that the said basket is placed in the emerged position in which the molten product (10) is out of the hot bath (9), while the said basket (3) then constitutes a protective screen preventing access to the hot bath (9).

2. Device according to Claim 1, characterized in that the basket (3) is hinged to a base (1-5) which encloses the vessel (2) and on which a lid (4) sitting over the basket (3) is mounted in a pivoting manner so that opening it causes the said automatic rise of the basket (3) when the lid (4) is lifted, while resilient means (6) are provided on the said basket (3) so that it is kept open as well as the lid (4) which is provided with means (4e) for acting on the resilient means (6) of the basket (3) for the purpose of deforming them in order to allow it to be immersed when the lid (4) is reclosed.

3. Device according to Claim 2, characterized in that a torsion spring (8), the ends of which bear against the basket (3) and the base (1-5), elastically loads the basket (3) in the direction of opening it.

4. Device according to Claim 2, characterized in that the rear part of the basket is provided with a flexible tab (6) which passes through a slot (5d) made in the edge of the base (2-5) and the end of which tab bears a transverse strip (6a) suitable for snap-fitting into a hook (5f) of the said base (1-5), while, in combination, the lid (4) includes two lugs (4e) which, when it is reclosed, pass through two notches (5e) in the edge of the base (1-5) and bear on the branches of the strip (6a) of the flexible tab (6) in order to unlock it.

5. Device according to Claim 4, characterized in that the tab (6) is removably fixed to the basket (3).

6. Device according to Claim 4, characterized in that the lid (4) is furthermore provided, on the one hand, with at least one pin (4c) which in its closed position bears against the basket (3) in order to keep it immersed and, on the other hand, with a tongue (4b) which includes means (4d) for locking to the base (1-5).

## Patentansprüche

1. Vorrichtung zum Schmelzen eines Materials (10) durch Eintauchen in ein Bad (9) warmer Flüssigkeit mit
einem Korb (3), der mit einer Vielzahl von kleinen Löchern durchlöchert ist,
einer Heizwanne (2), welche die Flüssigkeit enthält und
Einrichtungen (8), um auf den Korb eine Reaktionskraft auszuüben, so daß der Korb dazu neigt derart nach oben zu schwenken, daß der Korb in einer aufgetauchten Position angeordnet wird, bei welcher sich das geschmolzene Produkt (10) außerhalb des warmen Bades (9) befindet, während dann der Korb (3) eine Schutzvorrichtung ausbildet, um den Zugang zum warmen Bad (9) zu verhindern.

2. Vorrichtung nach Anspruch 1, dadurch gekennzeichnet, daß der Korb (3) in Bezug auf einen die Wanne (2) umfassenden Sockel (1-5) beweglich ist, und daß an dem Sockel ein den Korb (3) bedeckender Deckel (4) derart schwenkbar befestigt ist, daß dessen Öffnung automatisch besagtes Aufsteigen des Korbes (3) bewirkt, wenn man den Deckel (4) hochhebt, wohingegen am Korb (3) elastische Mittel (6) vorgesehen sind, um ihn sowie den Deckel (4) offen zu halten, der mit Einrichtungen (4e) zum Einwirken auf die elastischen Mittel (6) des Korbes (3) ausgestattet ist, und zwar in Hinblich auf deren Verformung, um das Absenken zu ermöglichen, wenn der Deckel (4) wieder geschlossen wird.

3. Vorrichtung nach Anspruch 2, dadurch gekennzeichnet, daß eine Torsionsfeder (8), deren Enden in Widerlage zum Korb (3) und zum Sockel (1-5) angeordnet sind, den Korb (3) in Richtung seiner Öffnung elastisch aufnimmt.

4. Vorrichtung nach Anspruch 2, dadurch gekennzeichnet, daß der hintere Teil des Korbes mit einer flexiblen Stütze (6) versehen ist, die durch einen im Rand des Sockels (2-5) ausgespaarten Durchlaß (5d) dringt und deren Ende einen Quersteg (6a) trägt, der zum Einrasten mit einem Haken (5f) des Sockels (1-5) geeignet ist, während in Kombination der Deckel (4) zwei Vorsprünge (4e) umfaßt, die, wenn man den Deckel wieder schließt, zwei Aussparungen des Randes vom Sockel (1-5) durchdringen und auf den Schenkeln des Steges (6a) der flexiblen Stütze (6) zum Abstützen kommen, um diese zu entriegeln.

5. Vorrichtung nach Anspruch 4, dadurch gekennzeichnet, daß die Stütze (6) am Korb (3) auf eine abnehmbare Weise befestigt ist.

6. Vorrichtung nach Anspruch 4, dadurch gekennzeichnet, daß der Deckel (4) ferner einerseits wenigstens mit einem Zapfen (4c) ausgebildet ist, der in geschlossener Position des Deckels in Widerlage gegen den Korb (3) tritt, um diesen abgesenkt zu halten und andererseits mit einem Lappen (4b) ausgebildet ist, der in Bezug auf den Sockel (1-5) eine Verriegelungseinrichtung (4d) umfaßt.
